(19)

Europäisches
Patentamt
European
Patent Office
Office européen
des brevets

(11) **EP 3 490 326 A1**

(12) **EUROPEAN PATENT APPLICATION**
published in accordance with Art. 153(4) EPC

(43) Date of publication:
**29.05.2019 Bulletin 2019/22**

(21) Application number: **17831281.5**

(22) Date of filing: **14.07.2017**

(51) Int Cl.:
*H04W 74/00* (2009.01)          *H04W 74/08* (2009.01)
*H04W 52/36* (2009.01)

(86) International application number:
**PCT/KR2017/007588**

(87) International publication number:
**WO 2018/016808 (25.01.2018 Gazette 2018/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.07.2016   US 201662365386 P
08.08.2016   US 201662371868 P
10.11.2016   US 201662420525 P
02.02.2017   US 201762454045 P
14.02.2017   US 201762458585 P**

(71) Applicant: **LG Electronics Inc.
Seoul 07336 (KR)**

(72) Inventors:
• **AHN, Joonkui**
  **Seoul 06772 (KR)**
• **KIM, Seonwook**
  **Seoul 06772 (KR)**
• **YANG, Suckchel**
  **Seoul 06772 (KR)**
• **YI, Yunjung**
  **Seoul 06772 (KR)**

(74) Representative: **Frenkel, Matthias Alexander
Wuesthoff & Wuesthoff
Patentanwälte PartG mbB
Schweigerstrasse 2
81541 München (DE)**

(54) **METHOD AND DEVICE FOR TRANSMITTING RANDOM ACCESS PREAMBLE**

(57)      Provided are a method and a device for transmitting a random access preamble. The device adjusts a coverage enhancement (CE) threshold for defining a CE level based on the power class of the device. The device determines the CE level based on the adjusted CE threshold and measured reference signal received power (RSRP). The device transmits the random access preamble using a random access preamble resource according to the CE level.

FIG. 2

Receive CE configuration — S210

Measure DL signal strength — S220

Adjust CE threshold according to power class — S230

Determine CE level — S240

Transmit RAP based on CE level — S250

EP 3 490 326 A1

**Description**

**BACKGROUND OF THE INVENTION**

Field of the invention

The present invention relates to wireless communication, and more particularly, to a method of performing a random access procedure in a wireless communication system, and a device using the method.

Related Art

A next-generation wireless communication system is required to support various user environments and greater communication capacity. Representative issues considered in the next-generation system include a massive machine type communications (MTC) which provides various services anytime anywhere by connecting a plurality of devices, ultra-reliable and low-latency communications (URLLC) considering a service which is sensitive to reliability and latency, or the like.

An MTC application or an Internet of Things (IoT) application requires a mechanical characteristic such as low cost and low power. In addition, a coverage issue is important since a plurality of devices are disposed to a specific region. This is because the plurality of devices disposed inside a building may undergo a serious path loss or penetration loss.

Ever since the release 13, 3rd generation partnership project (3GPP) long term evolution (LTE) has supported coverage enhancement (CE) to support devices which undergo a great path loss. In order to support coverage enhancement of up to at least 15dB, it is being introduced that a downlink channel and an uplink channel are transmitted repeatedly across a plurality of subframes or a plurality of frequency units.

A device supporting IoT/MTC is limited in terms of available maximum transmit power to reduce power consumption. In addition, the maximum transmit power may be given variously according to a power class in order to support various applications. Proposed is a method capable of supporting CE according to a power class of a device.

**SUMMARY OF THE INVENTION**

The present invention provides a method for transmitting a random access preamble in a wireless communication system and a device using the method.

In an aspect, a method for transmitting a random access preamble in a wireless communication system is provided. The method includes receiving, by a wireless device, a coverage enhancement (CE) configuration for CE from a base station, the CE configuration including information on at least one CE threshold for determining a CE level and a random access preamble (RAP) resource for each CE level, measuring, by the wireless device, a reference signal received power (RSRP) based on a received downlink signal, adjusting, by the wireless device, the at least one CE threshold based on the wireless device's a power class, and determining, by the wireless device, the CE level based on the at least one adjusted CE level and the measured RSRP, and transmitting a RAP by using the RAP resource for the determined CE level.

In another aspect, a device for transmitting a random access preamble in a wireless communication system includes a transceiver configured to transmit and receive a radio signal, and a processor operatively coupled to the transceiver. The processor is configured to receive a coverage enhancement (CE) configuration for CE from a base station, the CE configuration including information on at least one CE threshold for determining a CE level and a random access preamble (RAP) resource for each CE level, measure a reference signal received power (RSRP) based on a received downlink signal, adjust the at least one CE threshold based on the device's a power class, determine the CE level based on the at least one adjusted CE level and the measured RSRP, and transmit a RAP by using the RAP resource for the determined CE level.

Coverage enhancement can be more efficiently supported for devices having various power classes.

**BRIEF DESCRIPTION OF THE DRAWINGS**

FIG. 1 is a flowchart showing the conventional random access procedure.
FIG. 2 is a flowchart showing a random access procedure according to an embodiment of the present invention.
FIG. 3 shows an example of coverage depending on an adjusted coverage enhancement (CE) threshold.
FIG. 4 is a block diagram showing a wireless communication system according to an embodiment of the present invention.

## DESCRIPTION OF EXEMPLARY EMBODIMENTS

A wireless device may be fixed or mobile, and may be referred to as another terminology, such as a user equipment (UE), a mobile station (MS), a mobile terminal (MT), a user terminal (UT), a subscriber station (SS), a personal digital assistant (PDA), a wireless modem, a handheld device, etc. The wireless device may also be a device supporting only data communication such as a machine-type communication (MTC) device or an internet of things (IoT) device.

A base station (BS) is generally a fixed station that communicates with the wireless device, and may be referred to as another terminology, such as an evolved-NodeB (eNB), a base transceiver system (BTS), an access point, etc.

Hereinafter, it is described that the present invention is applied according to a 3rd generation partnership project (3GPP) long term evolution (LTE) based on 3GPP technical specification (TS). However, this is for exemplary purposes only, and thus the present invention is also applicable to various wireless communication networks.

In a carrier aggregation (CA) environment or a dual connectivity environment, the wireless device may be served by a plurality of serving cells. Each serving cell may be defined with a downlink (DL) component carrier (CC) or a pair of a DL CC and an uplink (UL) CC. The serving cell may be classified into a primary cell and a secondary cell. The primary cell operates at a primary frequency, and is a cell designated as the primary cell when an initial network entry process is performed or when a network re-entry process starts or in a handover process. The primary cell is also called a reference cell. The secondary cell operates at a secondary frequency. The secondary cell may be configured after an RRC connection is established, and may be used to provide an additional radio resource. At least one primary cell is configured always. The secondary cell may be added/modified/released by using higher-layer signaling (e.g., a radio resource control (RRC) message).

A subframe is a time unit to schedule downlink channels and uplink channels. One subframe may include a plurality of orthogonal frequency division multiplexing (OFDM) symbols. A time required to transmit one subframe is defined as a transmission time interval (TTI). On subframe may include 14 OFDM symbols, but this is for exemplary purposes only. The OFDM symbol is only for expressing one symbol period in the time domain, and there is no limitation in a multiple access scheme or terminologies. For example, the OFDM symbol may also be referred to as another terminology such as a single carrier frequency division multiple access (SC-FDMA) symbol, a symbol period, etc.

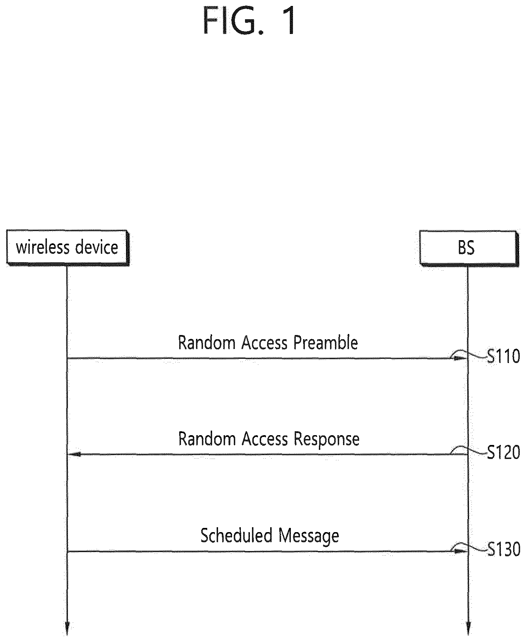

FIG. 1 is a flowchart showing the conventional random access procedure. The random access procedure is used by a wireless device to acquire an uplink (UL) time alignment with a BS or to allocate a UL radio resource. The wireless device may arbitrarily start the random access procedure, or may start it according to a random access preamble transmission order of the BS.

The wireless device receives a root index and a physical random access channel (PRACH) configuration index from the BS. Each cell has 64 candidate random access preambles defined by a Zadoff-Chu (ZC) sequence. The root index is a logical index for generating the 64 candidate random access preambles (RAPs) by the wireless device.

The RAP is limited to a specific time and frequency resource for each cell. The PRACH configuration index indicates a specific subframe and preamble format capable of transmitting the RAP.

The wireless device transmits a randomly selected RAP to the BS (S110). The wireless device selects one of the 64 candidate random access preambles. In addition, the wireless device selects a corresponding subframe by using the PRACH configuration index. The wireless device transmits the selected RAP in the selected subframe.

Upon receiving the RAP, the BS transmits a random access response (RAR) to the wireless device (S120). The RAR may include a timing advance command (TAC), a UL grant, and a cell-radio network temporary identifier (C-RNTI). The TAC is information indicating a time alignment value transmitted by the BS to the wireless device to maintain a UL time alignment. The wireless device updates UL transmission timing by using the time alignment value. When the wireless device updates the time alignment, a time alignment timer starts or restarts. The wireless device can perform UL transmission only when the time alignment timer is running.

The wireless device transmits a scheduled message to the BS according to a UL grant included in the RAR (S130).

Coverage enhancement (CE) for supporting devices which undergo a significantly great path loss is supported in 3GPP LTE by considering an environment where various IoT/MTC devices are installed. It is designed to apply a proper CE scheme to DL transmission and UL transmission by assuming a device supporting maximum transmit power (for convenience, referred to as 'P_normal'). In particular, P_normal may have a value of 20dBm or 23dBm. The IoT/MTC device may support maximum transmit power (for convenience, referred to as 'P_low') lower than the P_normal. For example, a device supporting P_low=14dBm may have a power amplifier with a maximum output of 1/4 in comparison with a device supporting P_normal=20dBm.

A random access procedure is proposed so that wireless devices having various power classes support CE.

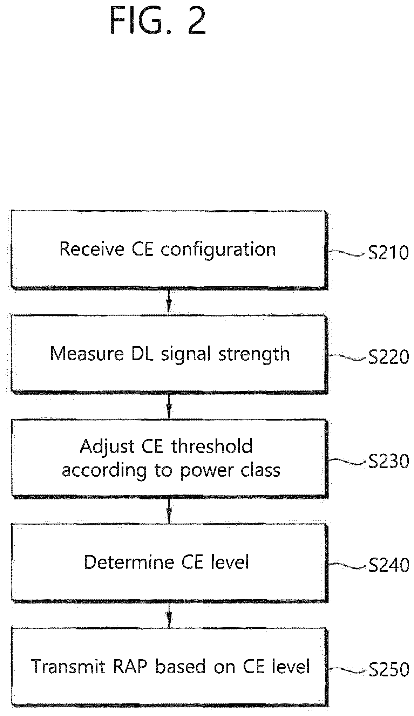

FIG. 2 is a flowchart showing a random access procedure according to an embodiment of the present invention.

A wireless device receives a CE configuration from a BS (S210). The CE configuration includes information on a CE threshold for configuring a CE level and an RAP resource for a corresponding CE level. The CE level provides a level of CE, and each CE level can be defined by a CE threshold. For example, Assuming that three CE levels (e.g., CE0, CE1, CE2) are supported, the BS may provide two CE thresholds (e.g., CEThreshold1, CEThreshold2). If a measurement value is less than the CEThreshold2, the CE2 is configured, and if the measurement value is greater than or equal to the CEThreshold2 and less than the CEThreshold1, the CE1 is configured. Otherwise, the CE0 is configured.

The CE configuration may include RAP resources for each CE level as shown in Table 1 below. Not all elements are essential.

[Table 1]

| Name | Description |
| --- | --- |
| RAP repetition | RAP repetition count at corresponding CE level |
| Starting subframe | RAP starting subframe periodicity |
| Target received power | Target preamble received power |

The wireless device acquires a measurement value by measuring signal strength based on a received DL signal (S220). The received DL signal may include a physical broadcast channel (PBCH), a discovery signal, a primary synchronization signal (PSS), a secondary synchronization signal (SSS), or a cell specific reference signal (CRS), but is not limited thereto. The measurement value may include a reference signal received power (RSRP), a reference signal received quality (RSRQ), and/or a received signal strength indicator (RSSI).

The wireless device adjusts the measurement value or the CE threshold of each CE level based on the wireless device's power class (S230). Details thereof will be described below.

It is assumed that the CE threshold is adjusted. The wireless device may determine the CE level based on the measurement value and the adjusted CE threshold (S240). It is assumed that two adjusted CE thresholds (e.g., CEThreshold1, CEThreshold2) are provided. If the measurement value is less than the CEThreshold2, the CE2 is configured. If the measurement value is greater than or equal to the CEThreshold2 and less than the CEThreshold1, the CE1 is configured. Otherwise, the CE0 is configured.

The wireless device transmits an RAP according to the CE level (S250). The wireless device may repeatedly transmit the RAP according to a repetition count corresponding to the CE level. If a highest CE level (e.g., CE3) is configured, the transmit power of the RAP may be determined as the maximum transmit power Pcmax defined in a corresponding subframe. If it is not the highest CE level, the transmit power of the RAP may be determined as $\min\{Pcmax_X, P_{target}+PL\}$. $P_{target}$ denotes a target preamble received power, and PL denotes an estimated DL path loss calculated by the wireless device.

Now, a method will be described in which the wireless device adjusts the measurement value or the CE threshold of each CE level according to the power class. Hereinafter, the measurement value will be explained by taking an RSRP for example. The following embodiment may be applied to a low power device having a reduced power class (e.g., P_low=14dBm).

In an embodiment, the wireless device applies an offset Y (Y>0) to the RSRP. That is, adjusted RSRP = measured RSRP - Y. The wireless device may determine the CE level by comparing the adjusted RSRP and the CE threshold. The offset Y may be given by the BS, or may be a value (e.g., Y=6dB for a device with P_low=14dBm if P_normal=20dBm) predetermined according to maximum transmit power of the wireless device. The low power device may select a higher CE level by assuming a case of having a signal-to-noise ratio (SNR) lower by Y dB than the same RSRP measurement value in comparison with a normal device (i.e., a device with P_normal).

The low power device may require a higher CE level than the normal device. This means that the maximum transmit power P_low of the low power device is insufficient to reach target transmit power. Therefore, this method may be applied only when P_low (or Pcmax,c, Pcmax_H,c, Pcmax_L,c) is less than the target transmit power (e.g., $P_{target}+PL$). For example, the offset may be applied if the target transmit power is greater than a specific value (e.g., P_low, Pcmax, c, Pcmax_H,c or Pcmax_L,c).

The value Y may be determined to a difference between the target transmit power and P_low (or Pcmax,c, Pcmax_H,c, Pcmax_L,c). The value Y may have an upper limit value corresponding to P_normal - P_low.

It is assumed that wireless device's maximum UL transmit power given by the BS is $P_{EMAX}$. The $P_{EMAX}$ may be given as system information. If maximum transmit power available for the wireless device is Ppowerclass, maximum transmit power Pcmax configured in a current subframe is determined such as Pcmax_L,c < Pcmax,c < Pcmax_H,c. Herein, Pcmax_H,c = min{Pemax,c, Ppowerclass}, Pcmax_L,c = min{Pemax,c - dealta1, Ppowerclass - delta2}. delta1 may be a transmit power error value of the wireless device. delta2 may be a value including the transmit power error value of the wireless device and a maximum power reduction (MPR).

The maximum transmit power of the wireless device may be limited not by Ppowerclass but by Pemax. If Pemax < Ppowerclass, a low power device with Ppowerclass=P_low may not need to select another CE level in comparison with a normal device. Therefore, the wireless device may not apply the offset if Pemax < Ppowerclass. If Pemax > Ppowerclass and target transmit power is greater than Ppowerclass, the offset may be applied.

The offset may be applied only when initial transmit power of an RAP to be transmitted by the low power device is determined to Pcmax or when a CE level defined to apply Pcmax is selected. In this case, the value Y may be determined to any one of the following values.

$$(1)\ Y = Pcmax\text{-}P\_low$$

$$(2)\ Y = (Pcmax\text{-}P\_normal)\text{-}(Pcmax\text{-}P\_low)$$

$$(3)\ Y = P\_normal\text{-}P\_low$$

$$(4)\ Y = A$$

In the above description, Pcmax may be a value (e.g., Pemax) given by the BS, or may be a value derived from Pemax. 'A' may be a predetermined value or a value given from a network, or may be a value determined based on P_low and/or a measurement value. The value A may be additionally applied to all of the values Y calculated in (1), (2), and (3) above.

If Pcmax is greater than P_normal, then P_normal may be applied. If Pcmax-P_low is less than 0, the offset Y may not be applied. When this is applied to the method (1) above, adjusted RSRP = measured RSRP - max{0, min(P_normal, Pcmax)-P_low}. It is possible that P_normal=20 dBm or 23 dBm, and P_low=14dBm. If Pcmax is replaced with Pemax, then adjusted RSRP = measured RSRP - max{0, min(P_normal, Pemax)-P_low}. If Pcmax is greater than a specific value, the specific value may be applied.

The same result obtained by applying the offset to the measurement value can also be obtained by applying the offset to the CE threshold. It is obvious that the same result can be obtained by adding the offset Y to the CE threshold instead of subtracting the offset Y from the RSRP value. For example, it is possible to express such that adjusted CE threshold = given CE threshold + max{0, min(P_normal, Pcmax)-P_low} or adjusted CE threshold = given CE threshold + max{0, min(P_normal, Pemax)-P_low}. In addition, if the offset is expressed by a minus value, it is possible to express such that adjusted CE threshold = given CE threshold - min{0, P_low-min(P_normal, Pemax)}. It is possible that P_normal=20 dBm or 23 dBm, and P_low=14 dBm.

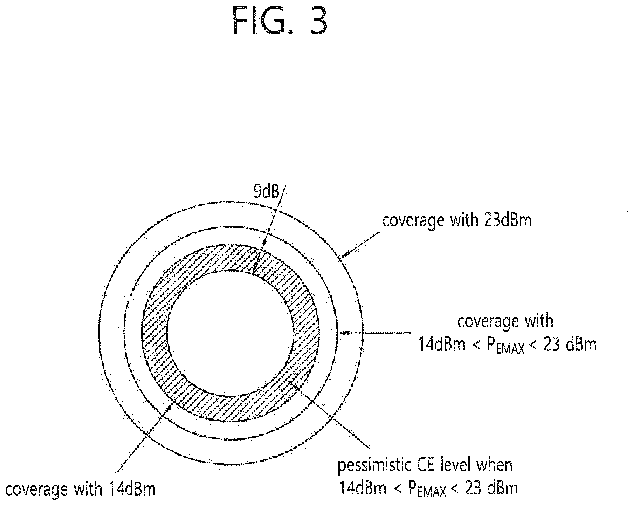

FIG. 3 shows an example of coverage depending on an adjusted CE threshold.

If an offset Y is defined as Y=P_normal-P_low, a low power device with P_low=14 dBm may always apply an offset of 9 dB to a CE threshold in comparison with a normal device with P_normal=23 dBm. If Pemax is set to be less than P_normal, the low power device may have a CE level higher than necessary in comparison with the normal device, which may cause unnecessary RAP repetition. Accordingly, the CE threshold needs to be adjusted based on Pemax which is less than P_normal.

In another embodiment, a wireless device may not attempt an access to a corresponding cell if target transmit power Pt (or Pt+X, where X is an offset satisfying X>=0) is not satisfied with maximum transmit power at a maximum supported CE level.

In a case where only a single CE level is applicable and if the wireless device needs to transmit an RAP with Pt, if the maximum transmit power is less than Pt+X, the wireless device may give up the access to a corresponding cell and may search for another cell. X may be given by a BS or may be a value predetermined based on maximum transmit power.

In a case where the wireless transmits a preamble with Pcmax at a highest CE level, if the maximum transmit power is less than Pcmax + Z, the wireless device may give up an access to a corresponding cell and may search for another cell. Z may be given by the BS or may be a value predetermined based on maximum transmit power.

The BS may report whether to allow an access depending on a power class of the wireless device or whether to allow an access depending on a range of an RSRP measured by the wireless device from a corresponding cell, through system information or the like.

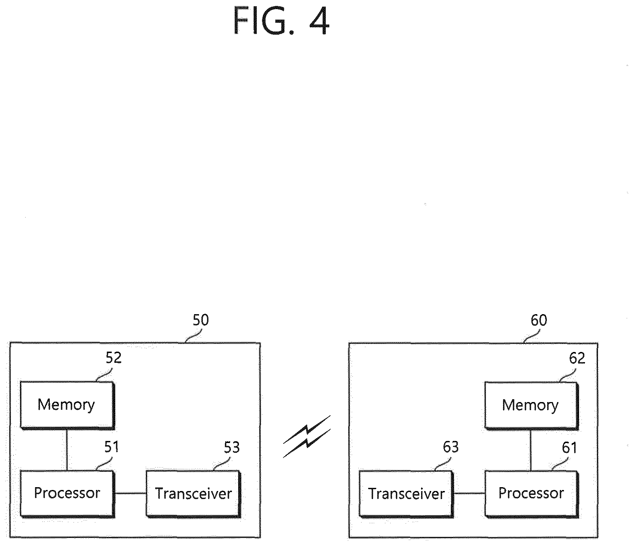

FIG. 4 is a block diagram showing a wireless communication system according to an embodiment of the present invention.

A wireless device 50 includes a processor 51, a memory 52, and a transceiver 53. The memory 52 is coupled to the processor 51, and stores various instructions executed by the processor 51. The transceiver 53 is coupled to the processor 51, and transmits and/or receives a radio signal. The processor 51 implements the proposed functions, procedures, and/or methods. In the aforementioned embodiment, an operation of the wireless device may be implemented by the processor 51. When the aforementioned embodiment is implemented with a software instruction, the instruction may be stored in the memory 52, and may be executed by the processor 51 to perform the aforementioned operation.

A BS 60 includes a processor 61, a memory 62, and a transceiver 63. The BS 60 may operate in an unlicensed band. The memory 62 is coupled to the processor 61, and stores various instructions executed by the processor 61. The transceiver 63 is coupled to the processor 61, and transmits and/or receives a radio signal. The processor 61 implements the proposed functions, procedures, and/or methods. In the aforementioned embodiment, an operation of a BS may be implemented by the processor 61.

The processor may include Application-Specific Integrated Circuits (ASICs), other chipsets, logic circuits, and/or data processors. The memory may include Read-Only Memory (ROM), Random Access Memory (RAM), flash memory, memory cards, storage media and/or other storage devices. The transceiver may include a baseband circuit for processing a radio signal. When the above-described embodiment is implemented in software, the above-described scheme may be implemented using a module (process or function) which performs the above function. The module may be stored in the memory and executed by the processor. The memory may be disposed to the processor internally or externally and connected to the processor using a variety of well-known means.

In the above exemplary systems, although the methods have been described on the basis of the flowcharts using a series of the steps or blocks, the present invention is not limited to the sequence of the steps, and some of the steps may be performed at different sequences from the remaining steps or may be performed simultaneously with the remaining steps. Furthermore, those skilled in the art will understand that the steps shown in the flowcharts are not exclusive and may include other steps or one or more steps of the flowcharts may be deleted without affecting the scope of the present invention.

**Claims**

1.    A method for transmitting a random access preamble in a wireless communication system, the method comprising:

    receiving, by a wireless device, a coverage enhancement (CE) configuration for CE from a base station, the CE configuration including information on at least one CE threshold for determining a CE level and a random access preamble (RAP) resource for each CE level;
    measuring, by the wireless device, a reference signal received power (RSRP) based on a received downlink signal;
    adjusting, by the wireless device, the at least one CE threshold based on the wireless device's a power class;
    determining, by the wireless device, the CE level based on the at least one adjusted CE level and the measured RSRP; and
    transmitting a RAP by using the RAP resource for the determined CE level.

2.    The method of claim 1, wherein the adjusting of the at least one CE threshold includes:

    determining an offset based on the wireless device's power class; and
    acquiring the at least one adjusted CE threshold by adding the offset to the at least one CE threshold.

3.    The method of claim 2, wherein the offset is determined based on the wireless device's power class and a maximum uplink transmit power given by the base station.

4.    The method of claim 3, wherein the offset is determined as $-\min\{0, P\_low - \min(23, Pemax)\}$, where Pemax denotes the maximum uplink transmit power given by the base station, and P_low denotes the wireless device's power class.

5.    The method of claim 4, wherein P_low has a value of 14 dBm.

6.    The method of claim 1, wherein the RAP resource includes the number of times of repeating RAP transmission in each CE level.

7.    The method of claim 1,
    wherein at least one CE threshold includes a first CE threshold and a second CE threshold,
    wherein the CE level is determined to a third CE level if the measured RSRP is less than the second CE threshold,

wherein the CE level is determined to the second CE level if the measured RSRP is less than the first threshold, and wherein the CE level is determined to the first CE level if the measured RSRP is not less than the first CE threshold and the second CE threshold.

8. The method of claim 7, wherein the transmitting of the RAP by using the RAP resource for the determined CE level includes:

   determining a RAP transmit power for the determined CCE level; and
   transmitting the RAP based on the RAP transmit power.

9. The method of claim 8, wherein, if the CE level is determined to the first CE level or the second CE level, the RAP transmit power is a configured maximum transmit power.

10. The method of claim 9, wherein, if the CE level is determined to the third CE level, the RAP transmit power is determined to min{Pcmax, $P_{target}$+PL}, where Pcmax denotes the configured maximum transmit power, $P_{target}$ denotes a given target preamble received power, and PL denotes an estimated downlink path loss calculated by the wireless device.

11. A device for transmitting a random access preamble in a wireless communication system, the device comprising:

   a transceiver configured to transmit and receive a radio signal; and
   a processor operatively coupled to the transceiver and configured to:

      receive a coverage enhancement (CE) configuration for CE from a base station, the CE configuration including information on at least one CE threshold for determining a CE level and a random access preamble (RAP) resource for each CE level;
      measure a reference signal received power (RSRP) based on a received downlink signal;
      adjust the at least one CE threshold based on the device's a power class;
      determine the CE level based on the at least one adjusted CE level and the measured RSRP; and
      transmit a RAP by using the RAP resource for the determined CE level.

12. The device of claim 11, wherein the processor is configured to adjust the at least one CE threshold by:

   determining an offset based on the device's power class; and
   acquiring the at least one adjusted CE threshold by adding the offset to the at least one CE threshold.

13. The device of claim 12, wherein the offset is determined based on the wireless device's power class and a maximum uplink transmit power given by the base station.

14. The device of claim 13, wherein the offset is determined as -min{ 0, P_low-min(23, Pemax) }, where Pemax denotes the maximum uplink transmit power given by the base station, and P_low denotes the device's power class.

15. The device of claim 14, wherein P_low has a value of 14 dBm.

# FIG. 1

# FIG. 2

Receive CE configuration — S210

Measure DL signal strength — S220

Adjust CE threshold according to power class — S230

Determine CE level — S240

Transmit RAP based on CE level — S250

# FIG. 3

9dB

coverage with 23dBm

coverage with
14dBm < $P_{EMAX}$ < 23 dBm

pessimistic CE level when
14dBm < $P_{EMAX}$ < 23 dBm

coverage with 14dBm

# FIG. 4

## INTERNATIONAL SEARCH REPORT

| | International application No. |
|---|---|
| | **PCT/KR2017/007588** |

**A.    CLASSIFICATION OF SUBJECT MATTER**

*H04W 74/00(2009.01)i, H04W 74/08(2009.01)i, H04W 52/36(2009.01)i*

According to International Patent Classification (IPC) or to both national classification and IPC

**B.    FIELDS SEARCHED**

Minimum documentation searched (classification system followed by classification symbols)
H04W 74/00; H04W 24/02; H04W 74/08; H04W 48/12; H04W 56/00; H04W 72/04; H04W 4/00; H04W 52/36

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: wireless device, base station, CE (Coverage Enhancement) setting, CE Level, CE reference value, RSRP (Reference Signal Received Power), RAP (Random Access Preamble)

**C.    DOCUMENTS CONSIDERED TO BE RELEVANT**

| Category* | Citation of document, with indication, where appropriate, of the relevant passages | Relevant to claim No. |
|---|---|---|
| A | US 2015-0215911 A1 (DIMOU, Konstantinos D. et al.) 30 July 2015<br>See paragraphs [0037], [0045], [0049], [0053]; and figure 5. | 1-15 |
| A | US 2015-0271686 A1 (INTEL CORPORATION) 24 September 2015<br>See paragraph [0024]; claim 1; and figure 2. | 1-15 |
| A | US 2016-0157271 A1 (HUAWEI TECHNOLOGIES CO., LTD.) 02 June 2016<br>See paragraphs [0137]-[0139]; and figure 2. | 1-15 |
| A | HUAWEI et al., "Considerations on PRACH Repetition Levels and Power Adjustment of PRACH Transmission", R1-140026, 3GPP TSG RAN WG1 Meeting #76, Prague, Czech Republic, 01 February 2014<br>See section 4. | 1-15 |
| A | KR 10-2015-0064196 A (INTERDIGITAL PATENT HOLDINGS, INC.) 10 June 2015<br>See claims 1-4. | 1-15 |

☐ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 OCTOBER 2017 (20.10.2017) | **23 OCTOBER 2017 (23.10.2017)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No.  +82-42-481-8578 | Telephone No. |

Form PCT/ISA/210 (second sheet) (January 2015)

INTERNATIONAL SEARCH REPORT
Information on patent family members

International application No.

**PCT/KR2017/007588**

| Patent document cited in search report | Publication date | Patent family member | Publication date |
|---|---|---|---|
| US 2015-0215911 A1 | 30/07/2015 | US 2017-0134967 A1<br>US 9456405 B2 | 11/05/2017<br>27/09/2016 |
| US 2015-0271686 A1 | 24/09/2015 | CN 106063370 A<br>EP 3123814 A1<br>JP 2017-511062 A<br>KR 10-2016-0113645 A<br>US 2017-0034818 A1<br>US 9439084 B2<br>WO 2015-147982 A1 | 26/10/2016<br>01/02/2017<br>13/04/2017<br>30/09/2016<br>02/02/2017<br>06/09/2016<br>01/10/2015 |
| US 2016-0157271 A1 | 02/06/2016 | CN 105247942 A<br>EP 3018962 A1<br>EP 3018962 A4<br>WO 2015-021618 A1 | 13/01/2016<br>11/05/2016<br>20/07/2016<br>19/02/2015 |
| KR 10-2015-0064196 A | 10/06/2015 | CN 104704884 A<br>EP 2904850 A1<br>EP 3185615 A1<br>HK 1213415 A1<br>JP 2015-537422 A<br>JP 2017-022720 A<br>RU 2015-116905 A<br>TW 201429174 A<br>US 2014-0098761 A1<br>WO 2014-055878 A1 | 10/06/2015<br>12/08/2015<br>28/06/2017<br>30/06/2016<br>24/12/2015<br>26/01/2017<br>27/11/2016<br>16/07/2014<br>10/04/2014<br>10/04/2014 |

Form PCT/ISA/210 (patent family annex) (January 2015)